Europäisches Patentamt

European Patent Office

Office européen des brevets

(11) Publication number: **0 106 523**
**B1**

(12) **EUROPEAN PATENT SPECIFICATION**

(45) Date of publication of patent specification: **01.04.87**

(21) Application number: **83305320.0**

(22) Date of filing: **12.09.83**

(51) Int. Cl.⁴: **B 01 D 53/22**

(54) Diffusion cell.

(30) Priority: **13.09.82 GB 8226083**

(43) Date of publication of application:
**25.04.84 Bulletin 84/17**

(45) Publication of the grant of the patent:
**01.04.87 Bulletin 87/14**

(84) Designated Contracting States:
**BE DE FR GB NL SE**

(56) References cited:
**DE-A-1 939 638**
**DE-B-1 533 021**

(73) Proprietor: **JOHNSON MATTHEY PUBLIC LIMITED COMPANY**
**43 Hatton Garden**
**London, EC1N 8EE (GB)**

(72) Inventor: **Bourne, Alan Arthur**
**11 Ridge Way**
**Wargrave Berks RG10 8AS (GB)**

(74) Representative: **Arthur, Bryan Edward et al**
**Withers & Rogers 4 Dyer's Buildings Holborn**
**London EC1N 2JT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the separation of a gas from a mixture of gases by diffusion and is particularly concerned with the provision of improved means for carrying out such separation.

When carrying out a separation process of the type just referred to, it is customary to bring the gas mixture into contact with a non-porous membrane which is selectively permeable to gas to be separated so that this gas will diffuse through the membrane preferentially with respect to the other gas or gases in the mixture. It is also customary to maintain a pressure difference between opposite sides of the membrane so as to encourage the required diffusion to proceed, the higher pressure being maintained on the gas mixture side of the membrane. Still further, it is frequently necessary for the gas mixture and the selectively permeable membrane to be maintained at elevated temperature in order to facilitate the diffusion process.

The separation process just referred to is often used for the separation of hydrogen from a mixture of gases containing hydrogen as in, for example, the purification of hydrogen gas. In this case the membrane is made from a material selectively permeable to hydrogen, such as palladium or a silver palladium alloy.

The invention will now be described with reference to such a separation of hydrogen from a mixture of gases containing hydrogen, although it is to be clearly understood that the invention is by no means so limited. For convenience this separation process will, throughout the remainder of this specification be referred to as a process for the "purification of hydrogen", although it will be appreciated that, in general, the process only leads to an increase albeit a very substantial increase, in the degree of purity of the hydrogen rather than to its absolute "purification". It does this by substantially decreasing the proportion of impurity gas or gases mixed with the hydrogen each time the process is carried out since the hydrogen permeable membrane permits the passage through it of most of the hydrogen gas but of only a relatively small proportion of the impurity gas or gases so that on the side of the membrane remote from the impure hydrogen, the proportion of impurity gas or gases mixed with the hydrogen is substantially reduced. If this process is repeated one or more times on the emerging "purified" hydrogen, hydrogen gas in a very high state of purity may be obtained.

In diffusion units or cells for the purification of hydrogen in the manner just described, the diffusion membranes are often made of a 23% silver-palladium alloy and are commonly in the form of relatively thick-walled tubing or relatively thin foil.

One form of tubing membrane assembly is described in British patent specification No. 966 122. In this assembly, one end of each tube in a bundle of tubes of hydrogen permeable material is connected in a gas tight manner to a chamber or manifold of substantially hydrogen impermeable material. The opposite ends of the tubes are sealed and, within each tube is a helical spring or some similar device extending along the length of the tube to prevent its collapse when pressure is applied to the outside surface. The tubes are typically of 23% silver-palladium alloy with an outside diameter of 0.16 cm (0.063 inch) and a wall thickness of 0.008 cm (0.003 inch) and, in use, impure hydrogen at a pressure of about $34.47 \times 10^5$ Pa (500 psi) is brought into contact with the outside walls of the tube at a temperature of about 500°C. Hydrogen then preferentially diffuses through the tubes into the chamber or manifold to which the tubes are connected.

Arrangements of the type just described have proved highly successful but they do suffer from the disadvantages that relatively large quantities of expensive silver palladium alloy are required and the cost of drawing the tube is relatively high. For example, just about the minimum wall thickness that can be achieved is 0.008 cm (0.003″) and the cost of drawing the tube is about £600 per kilo.

These factors led us to investigate the possibility of using silver palladium foil for the diffusion membrane since this can be rolled down to a thickness of 0.013 to 0.003 cm (0.005 inch to 0.001 inch) and the cost of rolling is only about £150 per kilo. Thus, for a given diffusion area, the weight of alloy required is reduced to at least a third of that necessary for a tube assembly and the cost of rolling unit weight of this reduced quantity of alloy into foil is only a quarter of the cost of drawing unit weight of alloy into tubing.

Replacement of tubing membranes by foil membranes would thus result in substantial cost reductions. A further advantage of the use of foil membranes is that their relative thinness results in an increased rate of diffusion. Indeed, other things being equal, the rate of diffusion is inversely proportional to thickness. Another way of looking at this question is that 0.003 cm (0.001 inch) foil produced from a given weight of silver-palladium alloy would have a hydrogen throughput nine times that of tubing having a wall thickness of 0.008 cm (0.003 inch) produced from the same weight of alloy.

This is because the surface area of the foil would be three times as large and the rate of diffusion of hydrogen through it, three times as high as with the tubing.

Various forms of foil diffusion units are described and illustrated in British patent specification No. 969 673. In most cases pieces of foil are folded and then welded along two or more edges to produce a foil envelope with a porous stiffening member within it to prevent the collapse of the envelope when a mixture of gases under pressure is brought into contact with the outside surfaces of the envelopes. An alternative arrangement is one in which the edges of a sheet of foil are secured in a gas-tight manner to an opening in the wall of a rigid container made of some material which is non-porous and substantially impermeable to the gas to which the membrane is permeable so as to form a gas permeable window in the container. Finally, there is provided a porous support member behind the window to prevent its collapsing when pressure is applied to the outside surface and also means for conveying away from the container gas which has passed through the membrane into the container.

Diffusion membranes made of thin 23% silver palladium alloy foil either in the form of envelopes or of windows as described above, although they have been found to operate very efficiently when used for the purification of hydrogen, do have a certain disadvantage. First, it is normally necessary to operate them at temperatures between 350°C and 400°C so that the foil is subject to thermal expansion and contraction as the units are brought into and taken out of service. Second, part of the hydrogen entering the foil interacts with the material of the foil and causes it to expand. This expansion is believed to be due to hydrogen atoms entering the alloy lattice and may amount to $1\frac{1}{2}$%. Further, this is reversible process so that when the pressure is reduced and/or conditions are otherwise favourable for the release of hydrogen from the lattice and the hydrogen is so released, the foil contracts either wholly or partially to its original size. It follows that quite early in the life of the membrane it is subject to repeated expansions and contractions and it is found that this fairly rapidly leads to the development of holes, splits, tears and cracks and similar faults in the membrane.

It is an object of the present invention to provide a diffusion membrane mounted such that the disadvantage just described in mitigated if not completely obviated.

The invention utilises a perforated support member such as a perforated metal sheet or a recticulate member such as a sheet of woven metal gauze. Such perforated members are known, for example from US Patent 3447288 and 3486301. In the invention, which is defined in the appended claim, the membrane is secured to the support member in such a way that those portions of the membrane which extend across the entrances to the channels or across the holes in the member, are, at room temperature, not drawn tightly across the said entrances or holes but, rather, sag as they extend across the entrance or holes.

One form of hydrogen diffusion cell according to the invention will now be described by way of example only with reference to the accompanying drawings of which:

Figure 1 is a part-sectioned plan view of the cell.

Figure 2 is a part-exploded, sectioned elevation of the cell.

Figure 3 is a diagram of a multi-cell arrangement for the purification of hydrogen.

As will be seen from the drawings, the cell consists of a rectangular section ring 1, in the flat surfaces of which are machined concentric grooves 2 and through the curved wall of which there passes an outlet tube 3. Supported diffusion membrane assemblies 4, each comprising a metal gauze 5 and a silver-palladium alloy foil 6 are bonded to the flat surfaces of the ring 1 by means of silver rings 7 and are in turn supported by sintered stainless steel discs 8.

In use the cell is heated to about 350°C and contacted with a mixture of gases under pressure as indicated by the arrows A. Hydrogen from the mixture then preferentially diffuses through the silver palladium foils, passes through the sintered stainless steel discs 8 and out through the tube 3.

Details of the construction and method of assembly of the cell are as follows:

The rectangular section ring 1 has an outer diameter of about 5.72 cm (2.25 inches) an inner diameter of 4.45 cm (1.75 inches) and is 1.27 cm (0.5 inch) thick. It is made of 18/8 stainless steel and, after fabrication, including the machining of the 0.025 cm (0.01 inch) deep concentric grooves 2 and the welding in place of the tube 3, it is cleaned and then electroplated with a layer of nickel about 0.0005 cm (0.0002 inch) thick and, on this, a layer of silver about 0.0003 cm (0.0001 inch) thick.

The gauzes 5 are disc shaped, about 5.72 cm (2.25 inch) in diameter and each have bonded to them a 0.003 cm (0.001 inch) thick 23% silver/palladium alloy foil to form a supported diffusion membrane assembly.

The gauze is made of Monel metal wire about 0.041 cm (0.016 inch) in diameter and woven to 1.30 mm (15 mesh) so that the openings in the gauze are roughy 0.70 cm (0.04 inch) square. In order to fabricate the supported diffusion membranes 4, the gauze is first flattened by subjecting it to a pressure of about 154 MN/m² (10 tons per square inch) until its original thickness of about 0.07 cm (0.028 inch) is reduced to about 0.038 cm (0.015 inch). This is done to provide material for support members for the foil in which the undulations are reduced to a minimum.

Next 5.72 cm (2.25 inch) diameter discs are cut from the gauze and cleaned by pickling them for about 30 minutes in a liquid prepared by dissolving 60 g of sodium nitrate in 100 ml of sulphuric acid and making the resulting solution up to 1 litre with water.

Following this, the silver rings 9, each of which have the same inner and outer diameters as the ring 1 and are 0.018 cm (0.007 inch) thick, are located in either side of a gauze 5 in a heated press and then pressed into the gauze at a temperature of 500°C, at a pressure of 116 MN/m² (7.5 tons per square inch) and in a reducing atmosphere. We have found it desirable to use rings made of oxide-free solder for this purpose.

The silver rings when forced into the gauze in this way provide a substantially hydrogen-impermeable annular zone around the periphery of the gauze and thus prevent hydrogen, and other gases, entering the cell "sideways" through the gauze. The embedded rings also facilitate the subsequent bonding of the supported diffusion membrane assembly to ring 1.

In place of two silver rings 0.018 cm (0.007 inch) thick, one ring 0.025 cm (0.010 inch) thick may be used. In this case the ring is forced into that surface of the gauze to which the diffusion foil will later be bonded.

On completion of the stage just described, the gauze is cleaned, preferably in an ultrasonic cleaner, and a disc of 0.003 cm (0.001 inch) thick 23% silver/palladium foil, previously cleaned by immersion in dilute nitric acid, is bonded to the gauze by pressing the two together in a die press at a pressure of 154 MN/m$^2$ (10 tons per square inch) and a temperature of 600°C for 2 minutes in a reducing atmosphere. During this process, a sheet of mica 0.01 cm (0.004 inch) thick is interposed between the die plunger and the foil.

We have found that the interposition of a mica sheet in this way protects the silver palladium foil from damage and is also instrumental in producing the required degree of sag of the foil where it extends across each opening of the mesh.

The compression step just described effects compression binding between the foil and the wires of the gauze except in the peripheral regions, where diffusion bonding between the silver of the silver-filled peripheral zone of the gauze and the foil is effected.

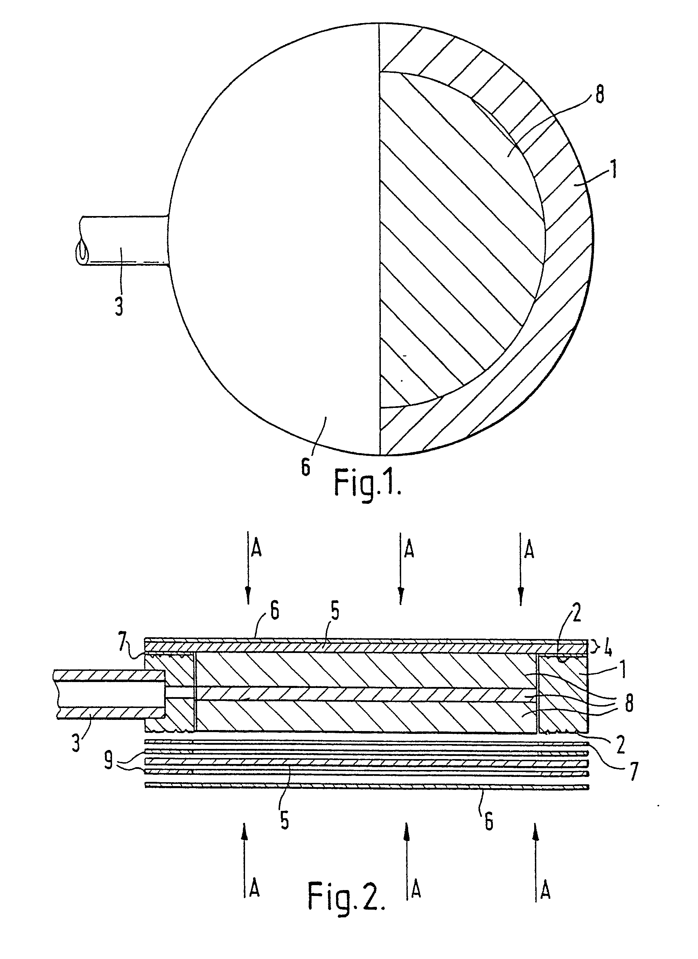

Finally, two supported diffusion membrane assemblies made as just described are bonded to the nickel and silver-plated ring 1 with the sintered stainless steel discs 8 located between the assemblies as indicated in Figure 2. This is done by assembling the component parts in a die press with an oxide-free silver ring 7, 0.025 cm (0.010 inch) thick, interposed between the ring 1 and each membrane assembly with a 5.72 cm (2.25 inch) diameter mica disc in contact with each outer foil surface of the assemblies and with pressing rings having the same inner and outer diameters as the ring 1 located between the mica discs and the die plunger and anvil of the press.

The assembly as just described is then subjected to a pressure of 116 MN/m$^2$ (7.5 tons per square inch) at 500°C in a reducing atmosphere for 2 minutes. This produces a strong, gas tight, diffusion bond between each grooved, flat surface of the ring 1 and the outer annular part of a supported membrane assembly, the grooves becoming substantially filled with silver in the process.

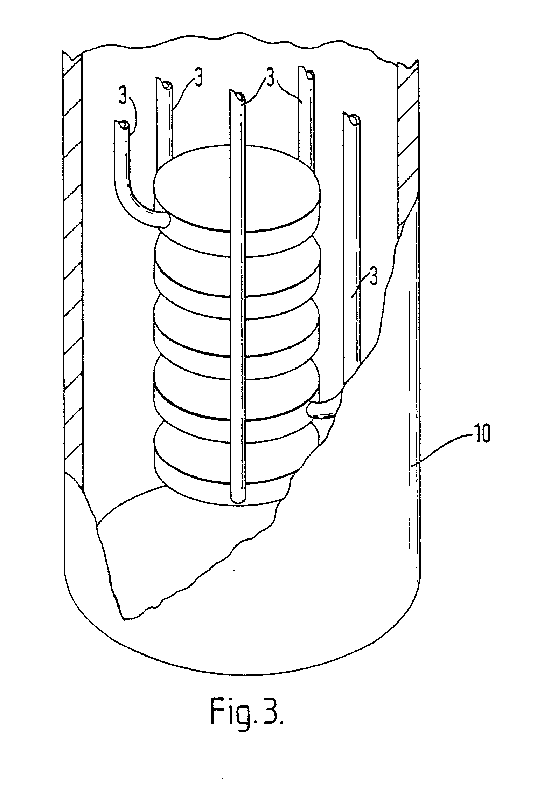

One arrangement for the assembly of diffusion units is shown diagrammatically in Figure 3. Here a stack of units is arranged within a container 10 which in service, is heated to about 400°C by some suitable means, such as an electrical heating jacket (not shown).

The outlet tube 3 of each diffusion unit passes through the upper face or lid (not shown) of the container. This upper face or lid is also provided with inlet and bleed tubes but apart from these tubes and outlet tubes 3 the assembly is gas tight.

Each of the tubes 3 feeds into a manifold (not shown) and in service, a mixture of gases including hydrogen is fed into the container at a pressure of about $20.68 \times 10^5$ Pa (300 psi), the bleed rate being sufficient to maintain this pressure in the container. The diffusion units are heated to about 350°C and hydrogen diffuses through them and passes along tubes 3 and thence into the manifold previously mentioned. In order to monitor the temperature of the diffusion units, a thermocouple (not shown) is secured to a face of each of them.

The arrangement just described can, with advantage, replace the assembly of diffusion tubes feeding into a manifold previously described. First, it is inherently cheaper and second, each outlet pipe 3 may be provided with a stop cock between the upper surface of container 1 and the manifold. If one or more diffusion units break down in service, they can simply be turned off and diffusion will continue through the remainder. If, however, a tube becomes unserviceable in a tube assembly, it is necessary to close the system down and to replace the whole assembly. If in the arrangement shown in Figure 3 one of the diffusion units starts to leak for example, this will produce a pulse in the system which can easily be detected by some suitable means.

Although one particular form of diffusion cell has been described in detail, it will be appreciated that many other arrangements according to the invention are possible. Indeed, even in the embodiment described, other materials may be used. For example, the support gauzes may be made of stainless steel instead of Monel metal, but in this case it would be necessary first to provide the gauze with successive thin layers of nickel and silver.

Yet again, coarser mesh gauze may be used. We have, for example, used Monel metal gauze of 3.36 mm (6 mesh) with quite successful results. In this case the wires are about 0.089 cm (0.035 inches) in diameter, the openings about 0.25 cm (0.1 inch) square and the mesh is compressed from a thickness of 0.17 cm (0.067 inches) down to a thickness of 0.083 cm (0.033 inches) before use.

As indicated above, the rigid support member may be made from perforated metal sheet or a reticulate member (e.g. a sheet of woven metal gauze), if desired, the support may be made from a sheet of sintered metallic particles which are inert to the gaseous mixture. The particules may be made from "Monel" (Registered Trade Mark) metal, a copper-nickel alloy or stainless steel.

**Claim**

Apparatus for separating a gas from a mixture of gases containing that gas comprises a membrane (6) selectively permeable to the gas to be separated supported on and secured to a relatively rigid support member (5) provided with channels or holes such that the gas, after passing through the membrane will pass into the channels or through the holes, characterised in that:

the membrane is secured to the support member at least at or adjacent to the periphery of the entrance to each channel or the periphery of each hole, such that those portions of the membrane which extend across the entrances to the channels or across the holes in the member, are, at room temperature, not drawn tightly across the entrances or holes but, rather, sag as they extend across the entrances or the holes.

**Patentanspruch**

Vorrichtung zum Separieren eines Gases von einem dieses Gas enthaltenden Gasgemisch, die eine Membrane (6) enthält, die eine dem zu separierenden Gas selektiv zugeordnete Permeabilität aufweist und einem relativ starren Stützglied (5) zugeordnet ist, das mit Kanälen oder Öffnungen derart versehen ist, daß das Gas nach dem Durchtritt durch die Mebrane in die Kanäle oder durch die Öffnungen geführt wird, dadurch gekennzeichnet, daß die Membrane an dem Stüzglied zumindest an dem oder angrenzend an den Eingang jedes Kanales oder den Umfang jeder Öffnung so festgelegt ist, daß die Teile der Membrane, die sich über die Kanaleingänge oder über die Öffnungen in dem Stützglied erstrecken, bei Raumtemperatur nicht hermetisch dicht über die Kanaleingänge bzw. Öffnungen gezogen, sondern eher durchgebogen werden, wo sie sich über die Kanaleingänge bzw. Öffnungen erstrecken.

**Revendication**

Dispositif de séparation d'un gaz contenu dans un mélange de gaz, comprenant une membrane (6) sélectivement perméable au gaz à séparer supportée par un élément de support auquel elle est fixée relativement rigide (5) pourvu de canaux ou de trous de telle sorte que le gaz, après passage à travers la membrane, passe dans les canaux ou à travers les trous, caractérisé en ce que la membrane est fixée à l'élément de support à la périphérie ou au voisinage de la périphérie de l'entrée de chaque canal ou de la périphérie de chaque trou de telle sorte que ces portions de la membrane qui s'étendent jusqu'aux entrées des canaux ou jusqu'aux trous de l'élément ne ferment pas hermétiquement, à la température ambiante, les entrées ou les trous mais que plutôt, elles s'étendent avec flottement jusqu'aux entrées ou trous.

Fig.1.

Fig.2.

Fig.3.